Europäisches Patentamt

(19) European Patent Office

Office européen des brevets

(11) Publication number: **0 086 182**
**B1**

(12) **EUROPEAN PATENT SPECIFICATION**

(45) Date of publication of patent specification: 22.04.87

(51) Int. Cl.⁴: **H 04 B 1/58, H 04 Q 3/00**

(21) Application number: **83850016.3**

(22) Date of filing: **26.01.83**

(54) Electronic impedance-matched line repeater.

(30) Priority: **09.02.82 SE 8200741**

(43) Date of publication of application:
**17.08.83 Bulletin 83/33**

(45) Publication of the grant of the patent:
**22.04.87 Bulletin 87/17**

(84) Designated Contracting States:
**AT CH DE FR GB IT LI NL**

(56) References cited:
**EP-A-0 022 561**
**US-A-4 181 824**

**IBM TECHNICAL DISCLOSURE BULLETIN, vol.
16, no. 7, December 1973, pages 2146-2147,
New York, USA D.E. FISK et al.: "Balanced
electronic hybrid circuits with line matching
impedors"**

**IBM TECHNICAL DISCLOSURE BULLETIN, vol.
16, no. 2, July 1973, pages 495-496, New York,
USA D.E. FISK et al.: "Balanced electronic
hybrid circuits"**

(73) Proprietor: **TELEFONAKTIEBOLAGET L M
ERICSSON
S-126 25 Stockholm (SE)**

(72) Inventor: **Lenell, Lars Anders
Murkelvägen 10
S-132 00 Saltsjö-Boo (SE)**

(74) Representative: **Wennerholm, Kristian et al
TELEFONAKTIEBOLAGET L M ERICSSON
S-126 25 Stockholm (SE)**

(56) References cited:
**IEE CONFERENCE PUBLICATION no. 163,
INTERNATIONAL CONFERENCE ON PRIVATE
ELECTRONIC SWITCHING SYSTEMS, 10th-
12th April 1978, pages 132-136, London, GB.
J.W. COENDERS et al.: "A system with
electronic line circuits and integrated
crosspoints"**

**IBM TECHNICAL DISCLOSURE BULLETIN, vol.
16, no. 4, September 1973, pages 1173-1174,
New York, USA M.A. PATTEN: "Electronic
hybrid telephone line pack"**

## Description

### Technical field

The present invention relates to an electronic impedance-matched line repeater for connecting a two-wire line to a subscriber exchange.

### Background art

A line repeater has the task of forming a junction between a two-wire line (the two-wire side) and two four-wire sides with the object of subdividing the traffic flow through the line into two one-way paths, (see e.g. IBM Technical Disclosure Bulletin, vol. 16, no. 2, July 1973, pages 495 to 496). Particularly with external line repeaters, i.e. such repeaters as are arranged between a subscriber exchange and an outgoing line (a line to the main station), it is desired to have as low-ohmic DC impedance as possible, seen from the line side (two-wire side). Furthermore, there is also desired a very well-defined AC impedance, which is in most cases somewhat higher, seen from this side. In known structures this impedance matching has been solved by accurate and relatively complicated dimensioning of hybrid transformers, e.g. according to the European Patent Application No. 0077351, published on 27.4.83. Impedance matching has been carried out in such cases with the aid of RC components in the hybrid transformer, the hybrid itself having been implemented in the form of a transformer coupling.

### Disclosure of invention

The object of the present invention is to provide an electronic line repeater, particularly an external line repeater, with impedance matching in respect of both AC and DC, as seen from the two-wire side.

This object is achieved in accordance with the invention, such that a feed-back loop containing amplifier elements is arranged from the two-wire side of the repeater to the incoming four-wire side, whereby desired DC and AC impedance can be obtained by given values for the selected working point and for the gain of the amplifier elements incorporated in the feed-back loop.

The invention is characterized by the features set forth in the characterizing portion of claim 1.

### Brief description of drawing

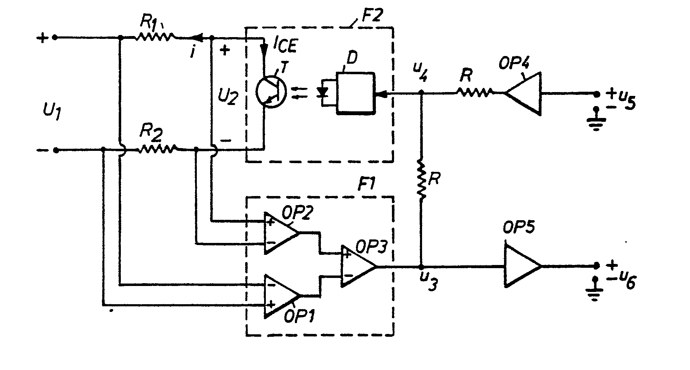

The invention will now be described in detail while referring to the appended drawing, illustrating a circuit diagram of the line repeater in accordance with the invention.

### Mode for carrying out the invention

In the circuit diagram of the Figure, the input terminal to the left forms the two-wire side of the repeater. A voltage $U_1$ appears across this terminal which comprises a direct component (the supply direct voltage) and an alternating component (the speech signals from and out, respectively, the line). The two-wire loop contains two resistors $R_1$ and $R_2$ having the same resistance, and constituting protective resistances to overvoltages. A balanced line amplifier F2 contains a driving stage D which is an operational amplifier circuit and an LED light-emitting diode for galvanic isolation between the two- and four-wire sides, described in the European Patent Application No. 0086183 (published on 17.8.83). The LED in the driving stage D is optically coupled to a phototransistor T, the collector-emitter circuit of which is connected to both resistors R1 and R2. The phototransistor T can also be connected to a Darlington circuit comprising two transistors, as is illustrated in the application mentioned. In accordance with the invention, a feed-back loop is provided, comprising a differential amplifier circuit F1 and a resistor R. The circuit F1 has two input pairs, of which one is connected across the input of the two-wire side and thus senses the potential drop $U_1$, the other pair being connected to the output side of the balanced line amplifier F2 and thus senses the potential drop $U_2$. The differential amplifier circuit F1 provides an output $U_3=F_1 (U_1-U_2)$ and contains three operational amplifiers OP1 to OP3. Both amplifiers OP1 and OP2 sense the potential drops $U_1$ and $U_2$, respectively, and each transmits signals to both inputs of the amplifier OP3. This amplifier subtracts and filters the output signals from the amplifiers OP1, OP2 and gives the output signal $u_3$, which does not contain any DC-component from the two-wire side but only the speech signal component, since a difference signal is formed in the amplifier OP3. The output signal from the amplifier OP3 thus constitutes an amplified speech signal from the two-wire side. This signal is connected via the resistor R to the input of the line amplifier F2.

The four-wire side receiver and transmission paths contain buffer steps OP4 and OP5, respectively, suitably looped operational amplifiers of known design. The receiver path buffer step OP4 is connected via the resistor R to the input of the line amplifier. The incoming speech signal is denoted $u_5$. If low-ohmic output is assumed for the buffer step OP5, as with the output of the final amplifier OP3 (which is the general case for operational amplifiers), the input signal $u_4$ to the line amplifier F2 (which thus only contains the speech signal) is obtained by voltage division between the resistances of the resistors R, i.e. $u_4=u_3/2+u_5/2$ if the resistors R have the same resistance. The following calculations are applicable for the line impedance matching in respect of DC and AC impedance matching.

### DC impedance matching

The DC resistance on the two-wire side input (DC impedance) is determined by the resistance of the resistors R1 and R2 and also by the selected working point of the transistor T. Assume that the voltage $U_2$ has a direct component $U_{02}$ and that the working point of the transistor T is selected so that its collector-emitter current is $I_{CE}$, then the DC impedance

$$Z_{dc}=R_1+R_2+U_{02}/I_{CE}.$$

The differential amplifier F1 is assumed to have very high-ohmic inputs and thus does not influence the value of $Z_{dc}$. Since $R_1+R_2$ are constant, the working point of the transistor T can be adjusted so that the desired value of $U_{02}/I_{CE}$ is obtained. The transistor T must however operate in its linear range.

AC impedance matching

From the circuit diagram it will be seen that the desired input impedance can be obtained if the amplification $F_1$ and $F_2$ in the units F1 and F2, respectively, are selected so that correct negative feed-back gives the desired input impedance. By superposition is obtained input impedance

$$Z_{AC}=\frac{(U_2)_i=o}{(i)U_1=o}$$

From the block diagram it will be seen that the following equation relationships can be set up:

$$u_2=F_2.u_4$$

$$u_3=F_1(u_1-u_2)$$

$$u_4=\frac{u_3}{2}+\frac{u_5}{2}$$

For the no-load state:
$I=0$, $U_1=U_2$, which gives $U_3=0$ and $u_2=F_2.U_5/2$, where $u_1$, $u_2$ denote the signal magnitudes of $U_1$ and $U_2$ respectively.

For short-circuiting:

$$u_1=0 \text{ and } i=\frac{u_2}{(R_1+R_2)},$$

which gives

$$u_3=-F_1.u_2$$

and

$$u_4=\frac{u_5}{2}-\frac{F_1.u_2}{2}$$

and

$$u_2=\frac{F_2}{2}u_5-\frac{F_1.F_2}{2}u_2,$$

so that

$$u_2=\frac{F_2}{(2+F_1.F_2)}.u_5$$

i.e.

$$i=\frac{F_2}{(2+F_1.F_2)(R_1+R_2)}.u_5$$

The input impedance $Z_{AC}$ for alternating current will thus be:

$$Z_{AC}=\frac{F_2.u_5}{2}.\frac{(2+F_1.F_2)(R_1+R_2)}{F_2.u_5}=\frac{(R_1+R_2)(2+F_1.F_2)}{2}$$

For example, if an AC impedance $Z_{AC}=600$ ohms is desired and $R_1=R_2=30$ ohms, there is obtained according to the above that $F_1.F_2=18$. Assume that $F_2=0,2$ which is a usual value for the coupling factor of an optocoupler, there is obtained $F_1=90$. This amplification of the block F1 is very moderate, and can be achieved without difficulty and be kept constant by suitably selecting the resistors determining the gain.

By introducing integrating or differentiating networks in a manner known per se, in the operational amplifier block F1, the gain $F_1$ can be made complex, i.e. $F_1=F_1(jw)$ whereby a complex $Z_{AC}$ may be obtained.

## Claims

1. Electronic impedance-matched line repeater included in a two-wire to four-wire converter for connecting a two-wire line to a telephone exchange including a two-wire side as well as an incoming and an outgoing four-wire side, the two-wire side of the repeater comprising an external line loop containing resistors ($R_1$, $R_2$) connected as overvoltage protection and a balanced line amplifier (F2), the output side of which is connected in series with said resistors ($R_1$, $R_2$) and the input side of which forms one (incoming) four-wire path via a first resistor (R), characterized in that a feedback loop is provided for impedance matching to the two-wire line, and constitutes a differential amplifier circuit (F1) with two input pairs, of which one is connected directly to the two-wire input and the other is connected across the output side of the line amplifier (F2), the output of the differential amplifier (F1) being connected via a second resistor (R) to the input of the line amplifier (F2), and furthermore forms the second (outgoing) four-wire path.

2. Electronic line repeater as claimed in claim 1, characterized in that said differential amplifier (F1) has a low-ohmic output which, via the first and the second resistor (R) is connected to a low-ohmic output at one (incoming) four-wire side (OP4).

3. Electronic line repeater as claimed in claim 2, characterized in that said first and second resistors (R) have the same resistance.

4. Electronic line repeater as claimed in any of the claims 1 to 3, characterized in that the amplification of the differential amplifier (F1) is frequency-dependent, so that complex impedance-matching with the two-wire side is obtained.

## Patentansprüche

1. Elektronischer impedanzangepaßter Leitungsverstärker, der in einem Zweidraht/-Vierdrahtwandler zur Verbindung einer Zweidrahtleitung mit einem Fernsprechamt einbezogen ist, enthaltend eine Zweidrahtseite sowie eine ankommende und abgehende Vierdrahtseite, wobei die Zweidrahtseite des Verstärkers eine externe Leitungsschleife umfaßt, die Widerstände ($R_1$, $R_2$) enthält, die als Überspannungsschutz angeschlossen sind, sowie einen Gegentaktleitungsverstärker (F2), dessen Ausgangsseite in Serie mit den Widerständen ($R_1$, $R_2$) verbunden ist und dessen Eingangsseite einen (ankommenden) Vierdrahtweg über einen ersten Widerstand (R) bildet, dadurch gekennzeichnet, daß eine Rückkopplungsschleife zur Impedanzanpassung für die Zweidrahtleitung vorgesehen ist und eine Differenzverstärkerschaltung (F1) mit zwei Eingangspaaren bildet, von denen das eine direkt mit dem Zweidrahteingang verbunden ist, während das andere quer zur Ausgangsseite des Leitungsverstärkers (F2) angeschlossen ist, wobei der Ausgang des Differenzverstärkers (F1) über einen zweiten Widerstand (R) mit dem Eingang des Leitungsverstärkers (F2) verbunden ist und außerdem den zweiten (abgehenden) Vierdrahtweg bildet.

2. Elektronischer Leitungsverstärker nach Anspruch 1, dadurch gekennzeichnet, daß der Differenzverstärker (F1) einen niederohmigen Ausgang aufweist, der für den ersten und zweiten Widerstand (R) mit einem niederohmigen Ausgang an einer (ankommenden) Vierdrahtseite angeschlossen ist (OP4).

3. Elektronischer Leitungsverstärker nach Anspruch 1, dadurch gekennzeichnet, daß der erste und zweite Widerstand (R) den gleichen Widerstandswert aufweisen.

4. Elektronischer Leitungsverstärker nach einem der Ansprüche 1 bis 3, dadurch gekennzeichnet, daß die Verstärkung des Differenzverstärkers (F1) frequenzabhängig ist, so daß eine komplexe Impedanzanpassung auf der Zweidrahtseite erhalten wird.

**Revendications**

1. Répéteur de ligne électronique avec adaptation d'impédance, incorporé dans un convertisseur bifilaire-quadrifilaire, destiné à connecter une ligne bifilaire à un centre de commutation téléphonique, comprenant un côté bifilaire ainsi qu'un côté quadrifilaire entrant et un côté quadrifilaire sortant, le côté bifilaire du répéteur comprenant une boucle de ligne externe qui contient des résistances ($R_1$, $R_2$) connectées en éléments de protection contre les surtensions, et un amplificateur de ligne symétrique (F2), dont la sortie est connectée en série avec les résistances ($R_1$, $R_2$), et l'entrée forme une voie quadrifilaire (entrante), par l'intermédiaire d'une première résistance (R), caractérisé en ce qu'une boucle de réaction est établie pour assurer l'adaptation d'impédance avec la ligne bifilaire, et cette boucle constitue un circuit amplificateur différential ($F_1$) comportant deux paires d'entrées, dont l'une est connectée directement à l'entrée bifilaire et l'autre est connectée à l'entrée de l'amplificateur de ligne (F2), la sortie de l'amplificateur différentiel (F1) étant connectée par une seconde résistance (R) à l'entrée de l'amplificateur de ligne (F2), et formant en outre la seconde voie quadrifilaire (sortante).

2. Répéteur de ligne électronique selon la revendication 1, caractérisé en ce que l'amplificateur différential (F1) comporte une sortie à faible impédance qui est connectée par l'intermédiaire des première et seconde résistances (R), à une sortie à faible impédance d'un côté quadrifilaire (entrant) (OP4).

3. Répéteur de ligne électronique selon la revendication 2, caractérisé en ce que les première et second résistances (R) ont la même valeur.

4. Répéteur de ligne électronique selon l'une quelconque des revendications 1 à 3, caractérisé en ce que l'amplification de l'amplificateur différentiel (F1) dépend de la fréquence, de façon à procurer une adaptation d'impédance complexe avec le côté bifilaire.